# EUROPÄISCHE PATENTSCHRIFT

(11) **EP 1 296 854 B1**
(45) Veröffentlichungstag und Bekanntmachung des Hinweises auf die Patenterteilung: **14.09.2005**
(21) Anmeldenummer: 01960450.3
(22) Anmeldetag: 03.07.2001
(51) Int. Cl.: B60R 7/02

(54) **LADERAUM FÜR EIN KRAFTFAHRZEUG**
LUGGAGE COMPARTMENT FOR A MOTOR VEHICLE
COMPARTIMENT A BAGAGES POUR UN VEHICULE

(30) Priorität: 05.07.2000 DE 10032706; 22.09.2000 DE 10047542
(43) Veröffentlichungstag der Anmeldung: 02.04.2003
(73) Patentinhaber: BOS GmbH & Co. KG, 73760 Ostfildern (DE)
(72) Erfinder: HASPEL, Klaus, 72108 Rottenburg (DE); SCHLECHT, Werner, P., 71665 Vaihingen/Enz (DE)
(74) Vertreter: Patentanwälte Ruff, Wilhelm, Beier, Dauster & Partner
(86) Internationale Anmeldenummer: PCT/EP2001/007598
(87) Internationale Veröffentlichungsnummer: WO 2002/002371

(56) Entgegenhaltungen:
- US-A- 5 669 537
- US-A- 5 715 978

## Beschreibung

Die Erfindung betrifft ein Kraftfahrzeug mit einem Laderaum mit einem Laderaumboden sowie mit zwei einander gegenüberliegenden Seitenverkleidungen.

Ein solcher Laderaum ist für einen Kombi-Personenkraftwagen bereits bekannt (BMW 5er Touring, aktuelle Baureihe). Dieser Laderaum wird nach hinten durch eine Heckklappe, nach vorne durch eine Rückenlehne einer Fondsitzbank, zu den Fahrzeugseiten hin durch jeweils eine Seitenverkleidung, nach unten durch einen Laderaumboden und nach oben durch einen Dachhimmel begrenzt. Sowohl die Heckklappe als auch die Rückseite der Rückenlehne, die Seitenverkleidungen und der Laderaumboden bilden Innenraumflächen. Die Seitenverkleidungen sind eben gestaltet und ragen rechtwinklig zum Laderaumboden nach oben ab. Die gegenüberliegenden Seitenverkleidungen sind somit parallel zueinander ausgerichtet. Im Bereich des Laderaumbodens ist eine Klappe vorgesehen, durch die ein unterhalb des Laderaumbodens befindlicher Hohlraum zugänglich ist. Zudem sind im Bereich des Laderaumbodens fahrzeugfest verankerte Halteösen vorgesehen, die zur Verzurrung und Festlegung von im Laderaum transportierten Gegenständen dienen können.

Aus der DE 1 895 469 U, die den nächstliegenden Stand der Technik darstellt, ist ein Kraftfahrzeug in Form eines Personenkraftwagens mit einem durch einen Heckdeckel verschließbaren Laderaum bekannt, der einen Laderaumboden aufweist. Zu beiden Fahrzeuglängsseiten ist der Laderaumboden durch zwei Seitenwände begrenzt, an denen leiterartige Befestigungsleisten befestigt sind. In dem Laderaumboden sind weitere, leiterartige Befestigungsleisten in entsprechenden Vertiefungen des Laderaumbodens eingelassen. Die Befestigungsleisten an den Seitenwänden des Laderaumes sind auf die Seitenwände aufgesetzt und verlaufen somit mit ihren leiterartigen Befestigungssprossen in geringem Abstand zur jeweiligen Seitenwand. Jede Seitenwand ist mit jeweils einer einzelnen Befestigungsleiste versehen.

Die US 5,669,537 A offenbart einen Kombi-Personenkraftwagen mit einem Laderaum, der nach unten durch einen Laderaumboden, nach vorne durch eine Rückenlehne einer Fondsitzbank und zu den Seiten hin durch Laderaumseitenwandungen begrenzt ist. Eine separate Baueinheit kann in dem Laderaum lösbar montiert werden. Die Baueinheit weist Seitenwangen, einen Boden und ein Deckelteil auf, die nach Art eines Regales oder eines Kastens in dem Laderaum montiert werden. Bei Bedarf kann diese Baueinheit aus dem Laderaum wieder entfernt werden.

Aus der US 5,715,978 A ist ein Personenkraftwagen mit einem durch einen Heckdeckel verschließbaren Kofferraum bekannt, in dem ebenfalls eine modulare Baueinheit lösbar befestigt werden kann. Die Baueinheit wird durch mehrere Plattenmodule aufgebaut, die einen Boden sowie Zwischenwände bilden. Die Baueinheit ist mittels einer Montageanordnung an einem Kofferraumboden verankerbar. Bei Bedarf kann die Baueinheit aus dem Fahrzeug entfernt werden.

Aufgabe der Erfindung ist es, ein Kraftfahrzeug der eingangs genannten Art zu schaffen, das eine variable Strukturierung und Nutzung des Laderaumes ohne Einschränkung des verfügbaren Raumes ermöglicht.

Diese Aufgabe wird durch die Merkmale des Anspruches 1 gelöst. Die ebene Fläche der Seitenverkleidungen wird durch die Profilschienen nicht wesentlich unterbrochen. Die Profilschienen können entweder innerhalb der Flächen der Seitenverkleidungen oder an den Eckbereichen vorgesehen sein.

In Ausgestaltung der Erfindung liegen die Profilschienen einander an den Seitenverkleidungen paarweise gegenüber. Durch die paarweise einander gegenüberliegende Anordnung der Profilschienen können die gegenüberliegenden Profilschienen zusammenwirken, insbesondere bei der Segmentierung des Kofferraumes durch Ablagedecks auf unterschiedlicher Höhe, sich vertikal und quer erstreckende Trenngebilde, Auffangnetze oder Sicherheitsgitter und Ähnliches. Es ist auch möglich, verschiedene Paare von Profilschienen mit unterschiedlichen Funktionen miteinander zu kombinieren.

In weiterer Ausgestaltung der Erfindung sind vertikal oder horizontal positionierbare Segmentier- oder Abdeckteile vorgesehen, die mit auf die Befestigungsfunktionen der Profilschienen abgestimmten Befestigungselementen versehen sind. Hierdurch sind wahlweise unterschiedliche Strukturierungen des Laderaumes erzielbar.

Nachfolgend sind bevorzugte Ausführungsbeispiele der Erfindung beschrieben und anhand der Zeichnungen dargestellt.
- Fig. 1: zeigt schematisch in perspektivischer Darstellung eine Ausführungsform eines erfindungsgemäßen Laderaumes,
- Fig. 2: den Laderaum nach Fig. 1 im Fahrzeugrohbau,
- Fig. 3: einen Querschnitt durch den Laderaum nach den Fig. 1 und 2 in vergrößerter Darstellung,
- Fig. 4 bis 22: den Laderaum oder Teile des Laderaumes mit unterschiedlichen, beispielhaften Einsatzfunktionen.

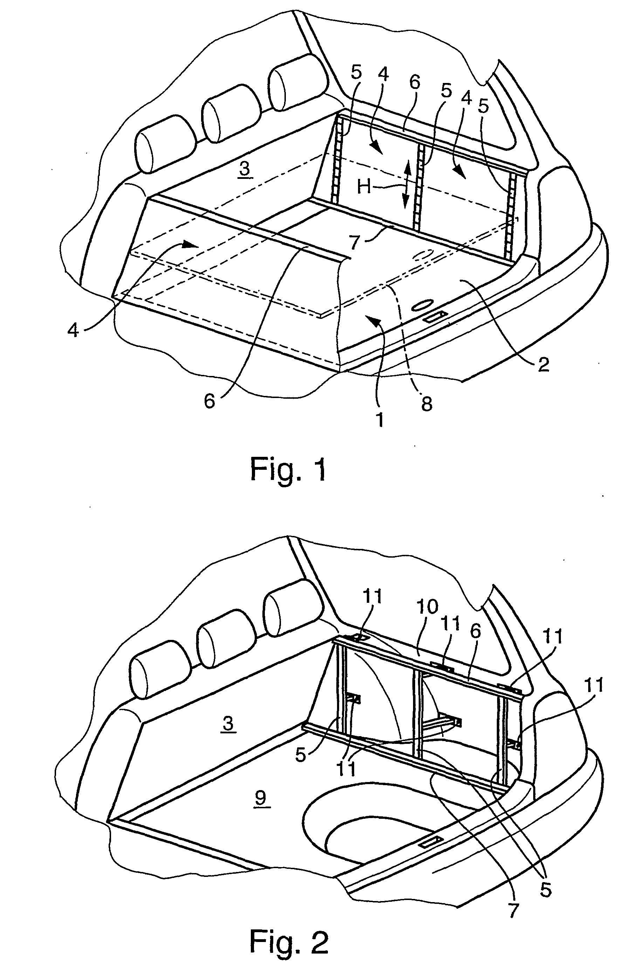

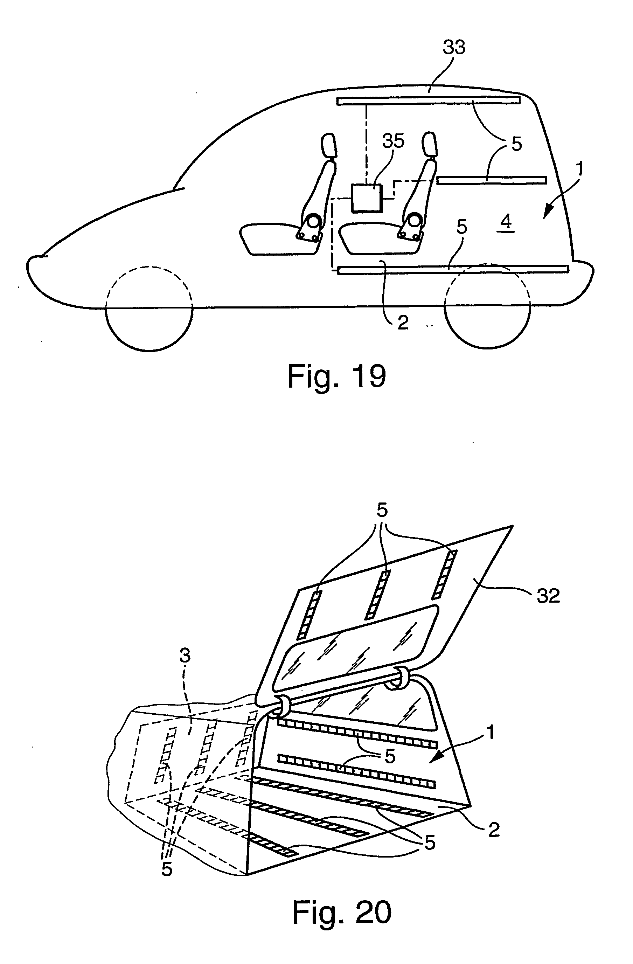

Ein Laderaum für einen Personenkraftwagen nach den Fig. 1 bis 22 weist einen Laderaumboden 2 auf, der in Fahrtrichtung gesehen nach vorne durch eine Fondsitzbank 3 begrenzt ist. Auf gegenüberliegenden Fahrzeugseiten ist der Laderaum durch Seitenverkleidungen 4 begrenzt, die beim dargestellten Ausführungsbeispiel sich vertikal und in Fahrzeuglängsrichtung erstrecken und somit einander parallel gegenüberliegen. Die Seitenverkleidungen 4 sind jeweils eben gestaltet, so dass sich eine nahezu quaderförmige Laderaumkapazität für den Laderaum ergibt. Die anhand der Fig. 1 bis 22 dargestellten Laderaumausführungen stellen jeweils einen Laderaum eines Personenkraftwagens mit einer Heckklappe dar. Bei anderen Ausführungsbeispielen der Erfindung sind entsprechende Laderäume für andere Arten von Kraftfahrzeugen, insbesondere für Stufenheck- oder Großraumlimousinen, Transporter oder ähnliches vorgesehen. Neben den als Seitenverkleidungen 4 gestalteten Innenraumflächen des Laderaumes ist auch der Laderaumboden 2 eine Innenraumfläche. Auch eine Rückseite der Fondsitzbank 3 stellt eine Innenraumfläche im Sinne der Erfindung dar. Gleiches gilt für einen Innenseite einer Heckklappe (Fig. 20), die ebenfalls als Innenraumfläche im Sinne der Erfindung anzusehen ist. Auch ein Dachbereich (Fig. 19) stellt eine erfindungsgemäße Innenraumfläche dar. Gleiches gilt für nicht dargestellte Innenseiten von Heckdeckeln, anderen Fahrzeuginnenausstattungen und ähnlichem.

Den Seitenverkleidungen sind verschiedene Funktionsspuren 5 bis 7 zugeordnet, die zumindest teilweise in den Seitenverkleidungen 4 räumlich integriert sind. Die Funktionsspuren 5 bis 7 sind spiegelsymmetrisch auf den gegenüberliegenden Fahrzeugseiten vorgesehen, so dass die jeweiligen Funktionsspuren 5 bis 7 einander paarweise gegenüberliegen. Es sind drei vertikale Funktionsspuren 5 vorgesehen, die sich in gleichmäßigen Abständen zueinander über die gesamte Höhe der Seitenverkleidungen 4 erstrecken. Im Bereich ihrer oberen Stirnenden werden die vertikalen Funktionsspuren 5 von einer horizontalen, oberen Funktionsspur 6 begrenzt, die sich über die gesamte Länge des Laderaumes horizontal erstreckt. Am Fußbereich der Seitenverkleidungen 4 ist auf jeder Seite jeweils eine untere horizontale Funktionsspur 7 vorgesehen, die sich über die gesamte untere Länge des Laderaumes erstreckt und parallel zu der oberen horizontalen Funktionsspur 6 verläuft. Die einander auf den gegenüberliegenden Seiten paarweise gegenüberstehenden Funktionsspuren 5, 6, 7 sind jeweils parallel zueinander ausgerichtet.

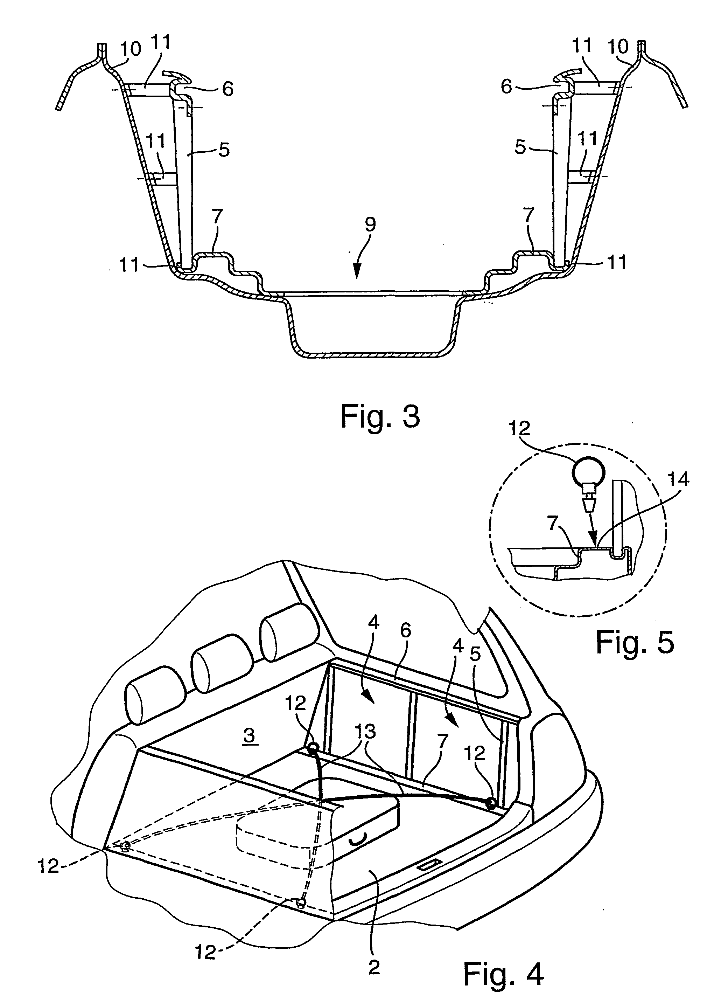

Wie anhand der Fig. 2 erkennbar ist, sind die Funktionsspuren 5 bis 7 rohbauseitig befestigt, indem sie mittels entsprechender Stützabschnitte 11 fest mit inneren Seitenteilen 10 der Rohbaukarosserie verbunden sind (Fig. 2 und 3). Die Stützabschnitte 11 sind vorzugsweise sowohl mit den Funktionsspuren 5 bis 7 als auch mit den inneren Seitenteilen 10 der Rohbaukarosserie verschweißt, so dass sich ein stabiler Verbund der Funktionsspuren 5 bis 7 mit der Rohbaukarosserie ergibt. Auch die Funktionsspuren 5 bis 7 untereinander stützen sich jeweils gegeneinander ab, indem die oberen und unteren Stirnenden der vertikalen Funktionsspuren 5 mit den oberen und unteren horizontalen Funktionsspuren 6, 7 fest verbunden sind. Auch hierfür können Verschweißungen oder andere Arten von Befestigungen vorgesehen sein. Auch die Stützabschnitte 11 können anstelle von Verschweißungen durch anders gestaltete lösbare oder unlösbare Befestigungselemente mit den Seitenteilen 10 verbunden sein.

Beim dargestellten Ausführungsbeispiel sind die Funktionsspuren 5 bis 7 durch durchgehende, geradlinige Profilschienen gebildet, in denen Längsnuten zur Führung (Funktionsspuren 6), Rasterreihen für Befestigungselemente (Funktionsspuren 5 gemäß Fig. 1) und/oder Auflage- und Stützflansche (Funktionsspuren 7) vorgesehen sind. Die Auflage- und Stützflansche der unteren horizontalen Funktionsspuren 7 sind insbesondere dazu vorgesehen, die Auflage und Abstützung des Laderaumbodens 2 zu übernehmen. Unterhalb des Laderaumbodens 2 ist der Rohbauboden 9 vorgesehen, der in grundsätzlich bekannter Weise mit wenigstens einer Vertiefung für die Aufnahme eines Reserverades oder ähnlichem versehen sein kann. Die Funktionsspuren 5 können leiterförmig (Fig. 1) gestaltet sein, so dass die Querstege oder -sprossen für Einhängungen oder Verbindungen mit korrespondierenden Befestigungselementen der Funktionsteile vorgesehen sind.

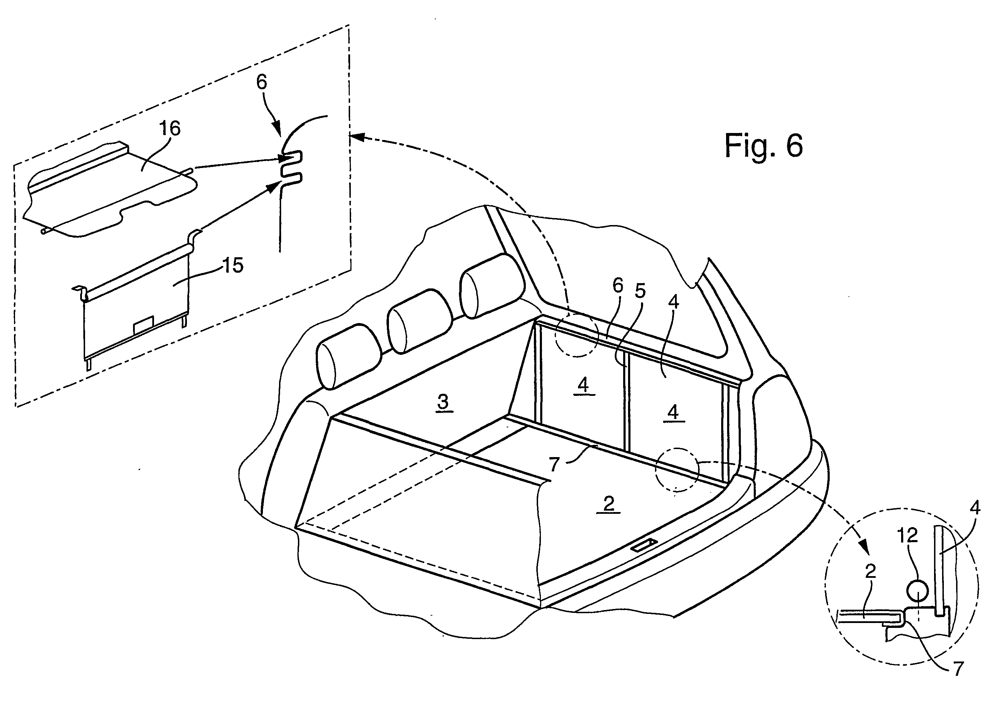

Die unteren horizontalen Funktionsspuren 7 weisen zudem eine in Fahrzeuglängsrichtung verlaufende Lochreihe auf, in denen gemäß Fig. 5 und 6 Halteösen verankerbar sind. Diese Halteösen 12 können verschiedene Einsatzzwecke haben und insbesondere Spanngurte 13 sichern.

Zwischen den Funktionsspuren, d.h. Profilschienen, sind die flächigen Verkleidungsteile der Seitenverkleidungen 4 positioniert und in geeigneter Weise befestigt.

Anstelle einer Lochreihe zur Befestigung können die Funktionsspuren 7 auch Befestigungsschienen aufweisen, an denen entsprechende Halte- oder Befestigungselemente stufenlos durch Verklemmung festgelegt werden können.

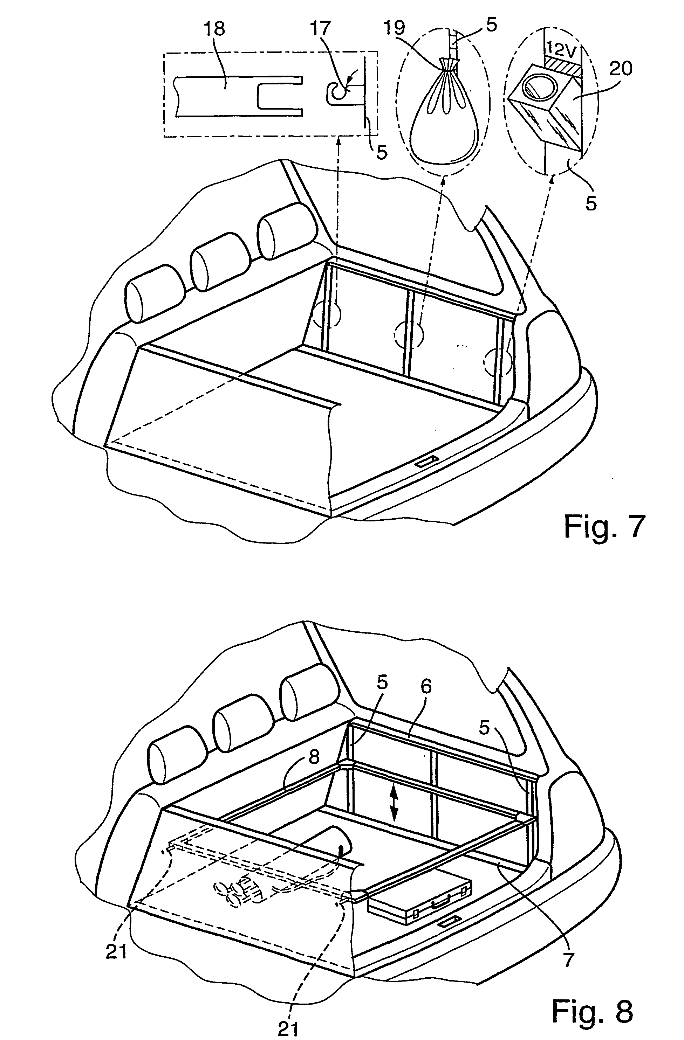

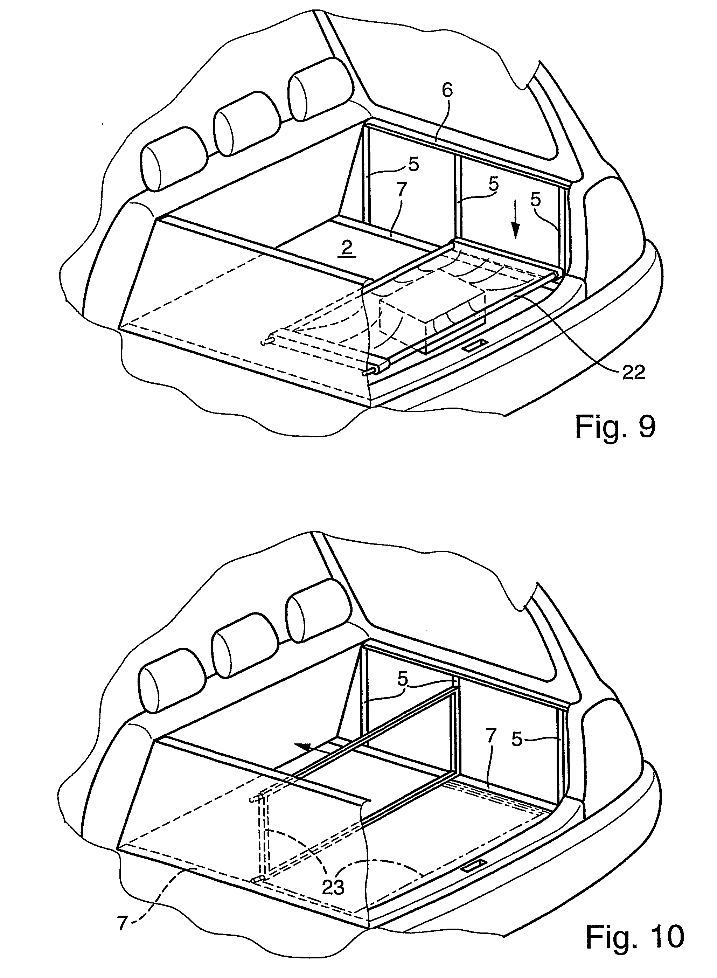

Wie anhand der Fig. 1 erkennbar ist, sind auch die vertikalen Funktionsspuren 5, d.h. Profilschienen, mit Rasterreihen in Form von Halte- oder Befestigungsaufnahmen versehen. Hierdurch ist es möglich, Funktionsteile stufenweise in unterschiedlichen Höhen festzulegen. Dies ist anhand der Fig. 1 durch eine sich über die gesamte Breite und Tiefe des Laderaumes erstreckende Deckplatte 8 als Funktionsteil dargestellt. Die Deckplatte 8 weist ähnlich einem mit einem Rahmen versehenen Abdecknetz 8' gemäß Fig. 8 an den Eckbereichen Befestigungselemente 21 auf, die zu den Befestigungs- oder Halteaufnahmen der vertikalen Funktionsspuren 5 korrespondieren und lösbare Einhängungen, Verrastungen oder anders gestaltete Befestigungen dieser Funktionsteile gewährleisten. Ein Netz 22 gemäß Fig. 9 entspricht vom grundsätzlichen Aufbau dem Netz 8' nach Fig. 8, wobei es sich lediglich über die Hälfte der Tiefe des Laderaumes erstreckt und somit auch lediglich zwischen den beiden hinteren vertikalen Funktionsspuren 5 angeordnet ist.

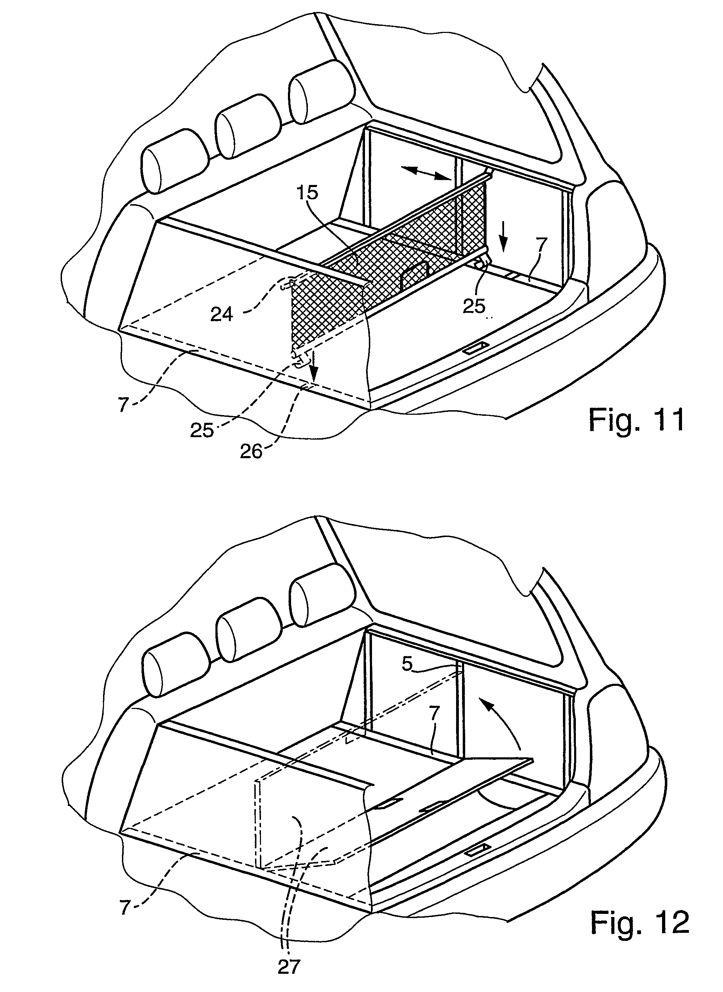

Wie anhand der Fig. 10 und 12 erkennbar ist, können die vertikalen Funktionsspuren 5 nicht nur zur Halterung oder Befestigung horizontaler Funktionsteile, sondern auch zur entsprechenden Befestigung vertikaler Funktionsteile 23, 27 vorgesehen sein, die jeweils aus auf dem Laderaumboden aufliegenden horizontalen Positionen in eine vertikale Segmentierungsfunktion überführt werden können. Beide Funktionsteile 23, 27 erstrecken sich über die gesamte Breite des Laderaumes. Das Funktionsteil 23 stellt ein mit einem Rahmen versehenes, flexibles Trenn- oder Abdecknetz dar. Das Funktionsteil 27 ist eine Abdeckplatte im Bereich des Laderaumbodens, die in vertikaler Aufstellung als Trennwand gestaltet sein kann. Auf den gegenüberliegenden Seiten weist die Abdeckplatte 27 entsprechende Verriegelungselemente auf, die auf die Befestigungsaufnahmen der vertikalen Funktionsspuren 5 abgestimmt sind.

Wie anhand der Fig. 7 erkennbar ist, können die vertikalen Funktionsspuren 5 noch weitere, beispielhaft ausgewählte Funktionen offenbaren. So können in der hinteren vertikalen Funktionsspur 5 elektrische Anschlüsse 20 integriert sein. In diesem Fall kann die Funktionsspur 5 modulartiger Träger unterschiedlicher Funktionselemente sein, indem insbesondere neben der elektrischen Anschlussdose 20 oberhalb und unterhalb auch noch Befestigungsaufnahmen vorgesehen sind. Die Befestigungs- und Halteaufnahmen der Funktionsspur können zudem zur Aufnahme von Befestigungshaken 19 dienen, an denen Transportgegenstände positioniert werden können. Schließlich können die Funktionsspuren 5 ein- und ausklappbare Haken 17 aufweisen, die entweder zur Halterung von Transportgegenständen oder gemäß der Darstellung nach Fig. 7 auch als Steckelement für die Positionierung eines plattenartigen Funktionsteiles 18 mit korrespondierender Stecknut gestaltet sein können.

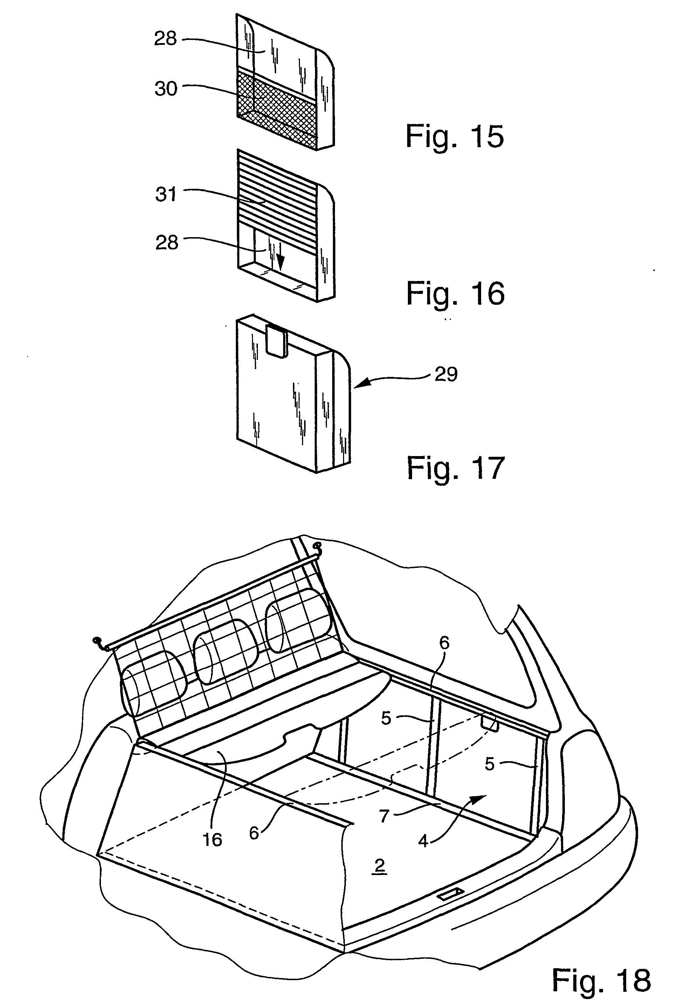

Die oberen horizontalen Funktionsspuren 6 sind insbesondere zur durchgängigen Linearführung vorgesehen, indem sie als mit einer Längsnut versehene Profilschienen gestaltet sind. In diesen kann gemäß den Fig. 6 und 11 ein in Fahrzeugquerrichtung verlaufendes Gehäuse 24 eines nach unten ausziehbaren Flächengebildes 15 positioniert sein. Am unteren Ende des Flächengebildes 15 ist eine Auszugleiste vorgesehen, die mit Einhängehaken 25 versehen ist, die auf korrespondierende Haltestege 26 in den unteren horizontalen Führungsspuren 7 abgestimmt ist, um dort eingehängt zu werden. Zudem können die oberen, horizontalen Funktionsspuren zum Ausziehen einer Abdeckplane 16 gemäß den Fig. 6 und 18 vorgesehen sein.

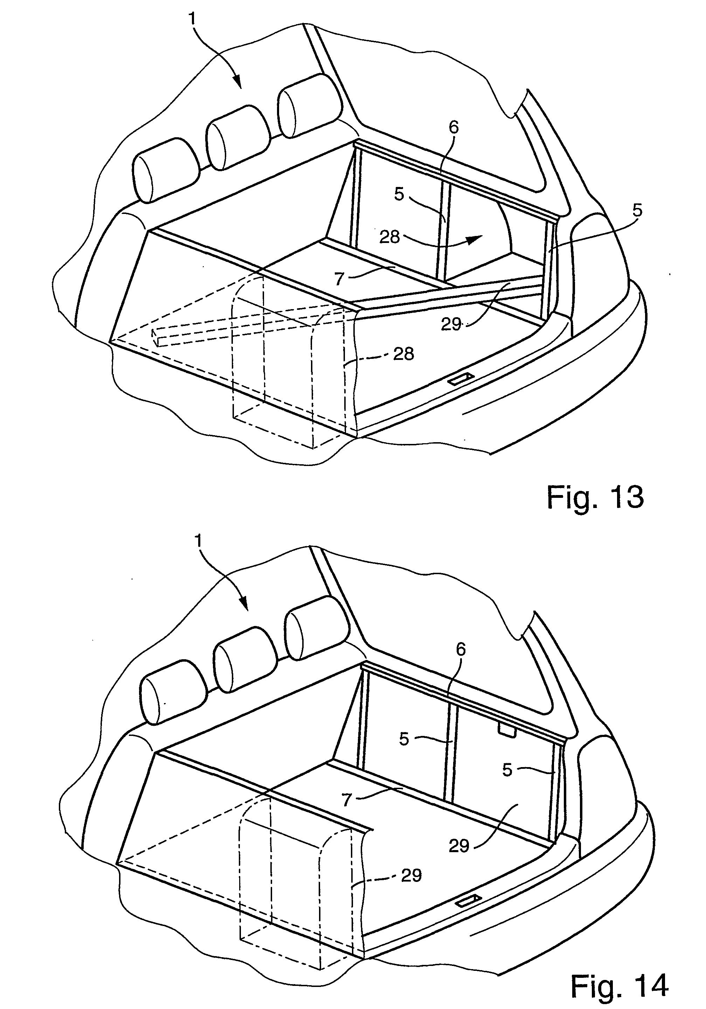

Bei den Ausführungsbeispielen nach den Fig. 13 bis 17 sind die Seitenverkleidungen derart gestaltet, dass sich zwischen den Funktionsspuren 5 bis 7 jeweils wenigstens ein Hohlraum 28 ergibt. Dieser kann zur Aufnahme von langen Gegenständen dienen, so dass die Laderaumkapazität erhöht wird. Die Hohlräume 28 können gemäß den Fig. 14 und 17 auch durch bündig einpassbare Behältnisse 29 ausgefüllt sein, wobei die Behältnisse 29 gemäß den Fig. 14 und 17 derart lösbar in den Hohlräumen 28 gehalten sind, dass sie entnommen und mittels eines Handgriffes kofferartig getragen werden können.

In den Fig. 15 und 16 sind beispielhaft zwei Varianten dargestellt, um den Hohlraum 28 zumindest teilweise abzudecken. Hierzu ist entweder ein Netz 30 vorgesehen, das gemeinsam mit dem Hohlraum 18 eine taschenartige Vertiefung bildet. Alternativ ist ein Schließrollo 31 vorgesehen, das bei Bedarf den jeweiligen Hohlraum 28 vollständig verschließen kann.

Bei einem Kraftfahrzeug nach Fig. 19 sind in einem Laderaum 1 mehrere Funktionsspuren 5 vorgesehen, die sowohl im Bereich eines Laderaumbodens 2 als auch im Bereich von Seitenverkleidungen 4 und in einem Dachbereich 33 angeordnet sind. Im Bereich des Laderaumbodens 2 und im Dachbereich erstrecken sich die Funktionsspuren 5 bis über einen Fondsitzbereich hinaus, so dass die Funktionsspuren 5 auch bei umgeklappter Rückenlehne der Fondsitzbank und entsprechend vergrößertem Laderaum genutzt werden können. Die Funktionsspuren 5 des Laderaumes 1 gemäß Fig. 19 nehmen Energieversorgungs- und/oder Datenleitungen auf, die schematisch strichpunktiert dargestellt sind. Diese Energieversorgungs- oder Datenleitungen, die im übrigen nicht mit Bezugszeichen versehen sind, sind an ein elektronisches Energieversorgungs- und/oder Datenverarbeitungszentrum 35 angeschlossen, das schematisch in Fig. 19 angedeutet ist.

Beim Ausführungsbeispiel nach Fig. 20 sind ergänzende Funktionsspuren an einer Rückseite einer Rückenlehne 3 der Fondsitzbank positioniert, wobei zumindest ein Teil dieser Funktionsspuren 5 derart mit den Funktionsspuren 5 des Laderaumbodens 2 fluchtet, dass bei umgelegter Rückenlehne sich ein im wesentlichen geradliniger Übergang zwischen diesen Funktionsspuren 5 ergibt. Auch im Bereich der Innenraumfläche 32 der Heckklappe sind mehrere Funktionsspuren 5 vorgesehen, die in gleichen vertikalen Fahrzeuglängsebenen angeordnet sind wie die zugeordneten Funktionsspuren 5 im Bereich des Laderaumbodens 2 und im Bereich der Rückenlehne der Fondsitzbank 3.

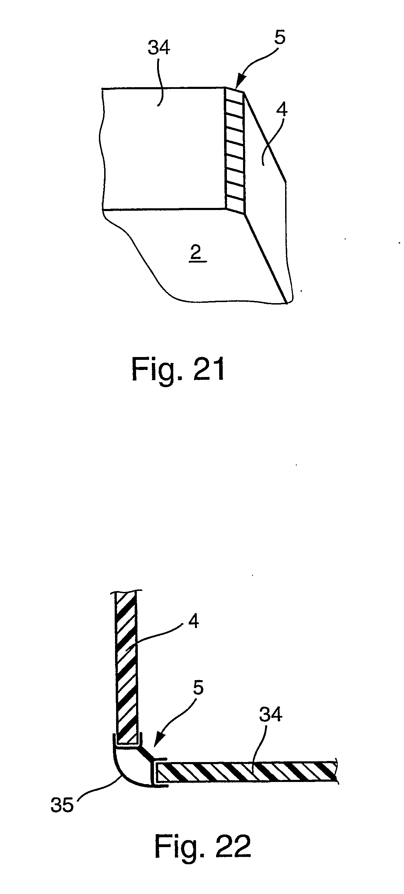

Beim Ausführungsbeispiel nach den Fig. 21 und 22 ist eine Funktionsspur 5 als Heckprofil 35 ausgebildet, das zwei Innenraumflächen 4 und 34 miteinander verbindet und gleichzeitig die gewünschte Zusatzfunktion für die Funktionsspur 5 aufweist. Die Innenraumfläche 4 stellt eine Seitenverkleidung dar. Die Innenraumfläche 34 ist durch ein entsprechendes Innenverkleidungsteil eines Heckspiegels für einen Kofferraum einer Stufenhecklimousine gebildet.

## Patentansprüche

1. Kraftfahrzeug mit einem Laderaum mit einem Laderaumboden (2) sowie mit zwei einander gegenüberliegenden Seitenverkleidungen (4), wobei im Bereich jeder Seitenverkleidung (4) mehrere horizontal und/oder vertikal im Laderaum angeordnete und zueinander beabstandete, geradlinige Profilschienen (5 bis 7) mit Längsführungs oder Befestigungsfunktion vorgesehen sind, die in den Seitenverkleidungen (4) bündig eingelassen und über Stützabschnitte (11) mit Teilen (10) der Rohbaukarosserie des Kraftfahrzeugs verbunden sind.

2. Kraftfahrzeug nach Anspruch 1, **dadurch gekennzeichnet, dass** an den Profilschienen (7) entsprechende Halte- oder Befestigungselemente stufenlos durch Verklemmung festlegbar sind.

3. Kraftfahrzeug nach Anspruch 1, **dadurch gekennzeichnet, dass** die Profilschienen (5 bis 7) einander an den Seitenverkleidungen (4) paarweise gegenüberliegen.

4. Kraftfahrzeug nach Anspruch 1, **dadurch gekennzeichnet, dass** vertikal oder horizontal positionierbare Segmentier- oder Abdeckteile (8) vorgesehen sind, die mit auf die Befestigungsfunktionen der Profilschienen (5 bis 7) abgestimmten Befestigungselementen (21) versehen sind.

## Claims

1. Motor vehicle with a luggage compartment having a luggage compartment base (2) and having two side panels (4) facing one another, there being provided in the region of each side panel (4) a plurality of linear profile rails (5 to 7) which are arranged horizontally and/or vertically in the luggage compartment and at a distance from one another and have the function of longitudinal guiding or securing, which profile rails (5 to 7) are set flush into the side panels (4) and are connected to parts (10) of the bodywork shell of the motor vehicle by way of support sections (11).

2. Motor vehicle according to claim 1, **characterised in that** corresponding holding or securing elements can be fastened to the profile rails (7) continuously by clamping.

3. Motor vehicle according to claim 1, **characterised in that** the profile rails (5 to 7) are located on the side panels (4) in pairs facing one another.

4. Motor vehicle according to claim 1, **characterised in that** vertically or horizontally positionable dividing or covering members (8) are provided, which members (8) are provided with securing elements (21) matched to the securing functions of the profile rails (5 to 7).

## Revendications

1. Véhicule automobile comportant un compartiment à bagages avec un fond (2) ainsi que deux habillages latéraux (4) opposés l'un à l'autre, dans lequel sont prévus, dans la zone de chaque habillage latéral (4), plusieurs rails profilés rectilignes (5 à 7) agencés horizontalement et/ou verticalement dans le compartiment à bagages, écartés les uns des autres et ayant une fonction de guidage longitudinal ou de fixation, qui sont noyés en affleurement dans les habillages latéraux (4) et reliés à des parties (10) de la structure brute de la carrosserie du véhicule automobile par des tronçons de soutien (11).

2. Véhicule automobile selon la revendication 1, **caractérisé en ce que** des éléments de retenue ou de fixation correspondants sont susceptibles d'être immobilisés en continu par coincement sur les rails profilés (7).

3. Véhicule automobile selon la revendication 1, **caractérisé en ce que** les rails profilés (5 à 7) sont par paire opposés les uns aux autres sur les habillages latéraux (4).

4. Véhicule automobile selon la revendication 1, **caractérisé en ce qu'**il est prévu des parties de segmentation ou de recouvrement (8) susceptibles d'être positionnées verticalement ou horizontalement et pourvues d'éléments de fixation (21) qui sont adaptés aux fonctions de fixation des rails profilés (5 à 7).
